(19) Europäisches Patentamt

**European Patent Office**

Office européen des brevets

(11) Veröffentlichungsnummer: **0 175 877 B1**

(12) # EUROPÄISCHE PATENTSCHRIFT

(45) Veröffentlichungstag der Patentschrift: **10.06.92**

(21) Anmeldenummer: **85109328.6**

(22) Anmeldetag: **25.07.85**

(51) Int. Cl.⁵: **C04B 35/52**, B28B 3/12

Die Akte enthält technische Angaben, die nach dem Eingang der Anmeldung eingereicht wurden und die nicht in dieser Patentschrift enthalten sind.

(54) **Polygranularer Kohlenstoffkörper und Verfahren zu seiner Herstellung.**

(30) Priorität: **24.09.84 DE 3435043**

(43) Veröffentlichungstag der Anmeldung:
**02.04.86 Patentblatt 86/14**

(45) Bekanntmachung des Hinweises auf die Patenterteilung:
**10.06.92 Patentblatt 92/24**

(84) Benannte Vertragsstaaten:
**AT BE CH DE FR GB IT LI LU NL SE**

(56) Entgegenhaltungen:
**DE-A- 2 254 723      DE-B- 2 414 449
DE-C- 1 142 540      DE-C- 1 671 141
FR-A- 2 440 345      US-A- 3 419 645
US-A- 4 213 956**

(73) Patentinhaber: **C. CONRADTY NÜRNBERG GmbH & Co. KG
Grünthal 1-6
W-8505 Röthenbach a.d. Pegnitz(DE)**

(72) Erfinder: **Schieber, Franz
Finkengasse 94
W-8505 Röthenbach a.d. Pegnitz(DE)**

(74) Vertreter: **Kern, Wolfgang, Dipl.-Ing. et al
Patentanwälte Kern, Brehm und Partner
Albert-Rosshaupter-Strasse 73
W-8000 München 70(DE)**

EP 0 175 877 B1

## Beschreibung

Die Erfindung betrifft einen polygranularen Kohlenstoffkörper aus körnigen bzw. pulverigen und/oder faserförmigen Kohlenstoffteilchen als Füllermaterialien und einem Bindemittel, der zur Verfestigung des Bindemittels einer thermischen Behandlung unterworfen worden ist, sowie ein Verfahren zu seiner Herstellung.

Polygranulare Kohlenstoffkörper der genannten Art werden beispielsweise mittels Form- und Strangpressen hergestellt. Für viele Anwendungsmöglichkeiten sind derartige Körper jedoch zu kompakt, weil für großflächige Körper aus Festigkeitsgründen relativ dicke Wandstärken benötigt werden. Deshalb hat man bisher in den Fällen, in denen z.B. aus Gewichtsersparnisgründen relativ großflächige Körper mit dünnen Wandstärken benötigt wurden, zu anderen Maßnahmen greifen müssen.

Zwecks Herstellung von dünnen, plattenförmigen Kohlenstoffkörpern wurde bereits vorgeschlagen (DE-OS 15 71 390) Graphitgewebe mit einem Bindemittel zu tränken, mehrere derartige Gewebeschichten aufeinanderzuschichten und den Binder zu verkoken. Dieses Verfahren ist jedoch nachteilig, weil es aufwendig ist, zu relativ hohen Ausschußquoten führt und deshalb teuer ist.

Es sind ferner großflächige Kohlenstoffkörper aus ein- oder mehrlagigen Kohlenstoff- oder Graphitfilzen bekannt, die in ein verkokbares Bindemittel getaucht werden, das anschließend unter Druck und Wärme verkokt wird (DE-PS 27 00 866).

Aus der US-A-4 213 956 ist ein plattenförmiger Graphitkörper, bestehend aus Graphit und einem pyrolisierbaren Matrixmaterial bekannt, der aus einer viskosen Dispersion von in einer Kunststoffmatrix befindlichen Graphitkristallen auf einem beheizten Walzenstuhl hergestellt wird.

Es ist ganz generell bekannt, plattenförmige Kohlenstoffkörper aus massiven Kohlenstoffblöcken durch Absägen und nachfolgendes Schleifen in gewünschten Abmessungen herzustellen. Der dafür erforderliche Arbeitsaufwand ist augenscheinlich und außerdem sind der Dicke des herzustellenden Körpers nach unten hin schon aus arbeitstechnischen Gründen enge Grenzen gesetzt, so daß beispielsweise großflächige Platten mit einer Dicke unterhalb 2 mm beim Absägen von massiven Blöcken bereits leicht zerbrechen. Besondere Schwierigkeiten jedoch entstehen hier bei der Herstellung dünnwandiger unebener Körper.

Die Aufgabe der Erfindung besteht deshalb darin, einen polygranularen Kohlenstoffkörper dünner Wandstärke und mit großen Flächenabmessungen zu schaffen, der formstabil, selbsttragend und steif ist und sich auf sehr viel wirtschaftlichere Weise als durch Herausarbeiten aus dicken, massiven Kohlenstoffblöcken herstellen läßt.

Diese Aufgabe wird - bezogen auf den Kohlenstoffkörper der eingangs erwähnten Art - durch die kennzeichnenden Merkmale des Patentanspruchs 1 gelöst.

Wesentliches Merkmal des erfindungsgemäßen polygranularen Kohlenstoffkörpers ist somit die Verwendung einer plastischen Kohlenstoffmasse aus bestimmten, kohlenstoffhaltigen Füllermaterialien mit einem relativ hohen Anteil an kohlenstoffhaltigem Bindemittel, die Scherkräften bei Raumtemperatur ausgesetzt wird, so daß ein dünnes, plattenförmiges Gebilde entsteht, das danach entweder als solches oder nach einer weiteren Verformung zur Herstellung bestimmter gewünschter körperlicher Konfigurationen einer Temperaturbehandlung unterworfen wird, durch die das Bindemittel kondensiert oder verkokt wird, so daß ein blechartiges Gebilde entsteht.

Die Aufgabe wird ferner durch ein Verfahren mit den Merkmalen des Patentanspruchs 7 gelöst.

Bei dem erfindungsgemäßen Verfahren hat sich herausgestellt, daß das Füllermaterial in Mischungen mit sehr hohen Anteilen kohlenstoffhaltiger Bindemittel nicht nur eine sehr gute Verformbarkeit im Walzenstuhl ergibt, sondern auch ein sehr gutes Glühverhalten aufweist, und zwar ohne Rißbildung und Ausschuß.

Gemäß einer vorteilhaften Ausgestaltung des Kohlenstoffkörpers sind die einzelnen dünnen Schichten des mehrschichtigen Körpers durch zusätzliches kohlenstoffhaltiges Bindemittel miteinander verklebt und einer weiteren Temperaturbehandlung zur Verkokung des zusätzlichen Bindemittels unterworfen worden. Bei einem mehrschichtigen Körper kann die Richtung der Strukturorientierung der aufeinanderfolgenden Schichten in bezug aufeinander um Winkel zwischen 0° und 180° wechseln.

Bei Verwendung von Kohlenstoffasern als Füllermaterial haben sich Faserlängen zwischen 1 bis 10 mm besonders bewährt.

Vorteilhafterweise weist das Bindemittel nach der Karbonisierung einen Kohlenstoffrückstand von 35 bis 70 Gew.-% auf.

Die Dicke des einschichtigen, blechartigen Materials liegt vorteilhafterweise zwischen 0,1 mm und 5 mm.

Zur Herstellung des Kohlenstoffkörpers wird zunächst eine plastisch verformbare Masse aus körnigen bzw. pulverigen und/oder faserförmigen Kohlenstoffteilchen als Füllermaterial und einem kohlenstoffhaltigen Bindemittel erzeugt. Als Bindemittel können Phenolformaldehydharz, Teer, Pech oder deren Mischungen Verwendung finden. Diese verformbare Masse wird in einem Walzenspalt mit unbeheizten Walzen bei etwa 20°C unter Einwirkung von Scherkräften zu dünnen, plattenförmigen Gebilden gewalzt, deren Dicke zwischen 0,1 und 5,0 mm beträgt. Diese ausgewalzte dünne Kohlenstoffmaterialschicht wird entweder einer weiteren Verformung zur Herstellung bestimmter gewünschter körperlicher Konfigurationen unterworfen und dann einer Temperaturbehandlung unterzogen oder als solche einer Temperaturbehandlung ausgesetzt, die in einer üblichen Verkokung bzw. Graphitisierung besteht, und dadurch einen dünnen, steifen, blechartigen Körper entstehen läßt.

Das Auswalzen der verformbaren Masse im Walzenspalt kann auch in der Weise erfolgen, daß das Material zunächst in einem Walzendurchgang bearbeitet wird und daraufhin einmal oder mehrere Male zusammengefaltet wird und wieder durch den Walzenspalt hindurchgeschickt wird, und zwar in der ursprünglichen Längsrichtung oder in Querrichtung, wodurch die einzelnen Schichten miteinander verkleben. Dieser Vorgang läßt sich mehrfach wiederholen, bis die gewünschte Materialdicke erreicht ist. Die erhaltene, ausgewalzte, noch plastisch verformbare Masse kann, wie oben bereits erwähnt, dann zu Körpern beliebiger Konfiguration moduliert bzw. maschinell weiterverformt werden und wird dann einer Temperaturbehandlung unterworfen, wodurch das Material fest, steif und formstabil wird und seine blechartige Erscheinungsform bzw. Beschaffenheit erhält.

Der fertige polygranulare Kohlenstoffkörper ist trotz seiner Dünnwandigkeit außerordentlich formstabil und weist sehr gute Festigkeitseigenschaften auf, die auch bei größeren Flächenabmessungen bewirken, daß er sich selbst trägt. Er kann beispielsweise die Form folgender Körper besitzen:

Platte:
1 mm Dicke, 300 x 600 mm Kantenlänge
Rohr:
1 mm Wanddicke, 300 mm Durchmesser, 500 mm Länge
Offene Spirale:
1 mm Wanddicke, 80 mm Außendurchmesser, 50 mm Höhe, 1-2 mm Zwischenräume
Offener Tiegel:
1 mm Wanddicke, 50 mm Durchmesser, 50 mm Höhe

Zur Herstellung eines solchen Tiegels wird, wie oben bereits grundsätzlich erläutert, zunächst das dünne, plastische, plattenförmige Gebilde aus noch nicht thermisch behandeltem Kohlenstoffmaterial zu einem Rohr geformt, dessen Durchmesser dem Durchmesser des gewünschten Tiegels entspricht und an dessen einem Ende dann ein Boden aus dem gleichen dünnen Material angeformt bzw. mit Hilfe des in dem Material enthaltenen Bindemittels angeklebt wird. Daraufhin wird dieser "grüne" Formling der thermischen Behandlung unterworfen, d.h. bei Temperaturen zwischen 700 und 1000°C geglüht, wodurch das Bindemittel unter Bildung von festen Kohlenstoffbrücken und flüchtigen Zersetzungsprodukten pyrolisiert wird.

## Patentansprüche

1. Polygranularer Kohlenstoffkörper gebildet aus Kohlenstoffteilchen als Füllermaterial und einem kohlenstoffhaltigen Bindemittel, der unter Einwirkung von Scherkräften aus einer plastischen Kohlenstoffmasse zunächst zu einem dünnen, plattenförmigen Körper und durch eine nachfolgende thermische Behandlung zu einem steifen, formstabilen, blechartigen Gebilde bestimmter Konfiguration geformt worden ist,
   dadurch **gekennzeichnet,**
   daß als Füllermaterial Koks, Ruß oder Kohlenstoffasern oder Mischungen daraus eingebaut sind, die mit einem Bindemittel ausgewählt aus der Gruppe bestehend aus Phenolformaldehydharz, Teer, Pech oder deren Mischungen zu einer Suspension vermischt worden sind, welche bei Raumtemperatur von etwa 20°C im Walzenspalt verarbeitet worden ist, wobei das Verhältnis von Bindemittel zu Füllermaterial in der Kohlenstoffmasse 0,5 bis 1,5 beträgt.

2. Kohlenstoffkörper nach Anspruch 1,
   dadurch **gekennzeichnet,** daß mehrere solcher dünner, plattenförmiger Körper zu einem mehrschichtigen Körper durch kohlenstoffhaltiges Bindemittel miteinander verklebt und einer Temperaturbehandlung unterworfen worden sind.

3. Kohlenstoffkörper nach Anspruch 2,
   dadurch **gekennzeichnet,** daß bei einem mehrschichtigen Körper die Richtung der Strukturorientierung der aufeinanderfolgenden Schichten in bezug aufeinander um Winkel zwischen 0 und 180° wechselt.

4. Kohlenstoffkörper nach einem der Ansprüche 1 bis 3,
   dadurch **gekennzeichnet,** daß das Bindemittel nach der Karbonisierung einen Kohlenstoffrückstand von 35 bis 70 Gew.-% aufweist.

5. Kohlenstoffkörper nach einem der Ansprüche 1 bis 4,
   dadurch **gekennzeichnet,** daß die Kohlenstoffasern eine Länge zwischen ca. 1 und 10 mm aufweisen.

6. Kohlenstoffkörper nach einem der Ansprüche 1 bis 5,
   dadurch **gekennzeichnet,** daß die Dicke des einschichtigen, blechförmigen Materials zwischen 0,1 und 5,0 mm beträgt.

7. Verfahren zum Herstellen eines Kohlenstoffkörpers nach einem der vorhergehenden Ansprüche, bei welchem aus Kohlenstoffteilchen als Füllermaterial und aus einem kohlenstoffhaltigen Bindemittel eine plastisch verformbare Kohlenstoffmasse hergestellt wird, die durch einen Walzenspalt unter Einwirkung von Scherkräften hindurchgeführt und zu einem plattenförmigen Körper verformt wird, der zur Schaffung eines blechartigen Gebildes als solcher oder nach einer weiteren Verformung einer Temperaturbehandlung unterworfen wird, dadurch **gekennzeichnet,** daß die Verformung im Walzenspalt mit unbeheizten Walzen bei etwa 20°C erfolgt.

8. Verfahren nach Anspruch 7, dadurch **gekennzeichnet,** daß die Temperaturbehandlung ein Kondensationsprozeß für das kondensierbare Bindemittel ist.

9. Verfahren nach Anspruch 7, dadurch **gekennzeichnet,** daß die Temperaturbehandlung bis zur Verkokung des Bindemittels führt.

10. Verfahren nach Anspruch 7, dadurch **gekennzeichnet,** daß die Temperaturbehandlung des Bindemittels und des Füllermaterials bei einer Temperatur bis zur Graphitisierungstemperatur erfolgt.

11. Verfahren nach einem der Ansprüche 7 bis 10, dadurch **gekennzeichnet,** daß die plastische Kohlenstoffmasse zunächst einmal durch den Walzenspalt geschickt, daraufhin einfach oder mehrfach zusammengefaltet und wenigstens noch einmal durch den Walzenspalt geschickt wird.

12. Verfahren nach Anspruch 11, dadurch **gekennzeichnet,** daß beim mehrmaligen Hindurchschicken der Kohlenstoffmasse durch den Walzenspalt jeweils die Walzrichtung geändert wird.

**Claims**

1. Polygranular carbon member of carbon particles as filler material and of a binder, which has been formed under the influence of shearing forces from a plastic carbon composition at first to a thin, plate-shaped member and through a subsequent thermal treatment to a rigid, dimensionally stable, sheet-metal-like structure of the specific configuration, characterized in that as filler materials coke, carbon black or carbon fibers or mixtures thereof are used mixed with a binder selected from the group consisting of phenolformaldehyde resin, tar, pitch or mixtures thereof to form a suspension which is worked in a roller gap at room temperature of about 20°C, the relation between the binder and the filler material within the carbon composition being 0.5 to 1.5.

2. Carbon member according to claim 1, characterized in that a plurality of such thin, plate-shaped members have been adhesively joined together through a carbonaceous binder and have been subjected to a temperature treatment.

3. Carbon member according to claim 2, characterized in that in case of a multi-layer member the direction of structure orientation of successive layers in relation to one another changes by angles of between 0° and 180°.

4. Carbon member according to one of the claims 1 - 3, characterized in that the binder includes after carbonization a carbon residue from 35 to 70 weight-%.

5. Carbon member according to one of the claims 1 - 4, characterized in that the carbon fibers have a length of between 1 to 10 mm.

6. Carbon member according to one of the claims 1 - 5, characterized in that the thickness of the single-layer, sheet-metal-like shaped material is between 0.1 and 5.0 mm.

7. Process for the manufacture of a carbon member according to one of the preceding claims, in which a plastically deformable carbon composition is produced from carbon particles as filler material and from a carbonaceous binder, which composition is passed through a roller gap under the action of shearing forces and is deformed to a plate-shaped member subjected as such or after further deformation to a temperature treatment in order to provide a sheet-metal-like structure, characterized in that the deformation in the roller gap is provided at about 20°C with unheated rolls.

8. Process according to claim 7, characterized in that the temperature treatment is a condensation process for the condensable binder.

9. Process according to claim 7, characterized in that the temperature treatment takes place until the binder is coked.

10. Process according to claim 7, characterized in that the temperature treatment of the binder and the filler material takes place at a temperature to the graphitization temperature.

11. Process according to one of the claims 7 - 10, characterized in that the plastic carbon composition is at first passed once through the roller gap, thereupon folded together once or several times and at least passed once more through the roller gap.

12. Process according to claim 11, characterized in that the rolling direction is respectively changed, when the carbon composition is passed several times through the roller gap.

**Revendications**

1. Corps en carbone polygranuleux, constitué par des particules de carbone formant la matière de remplissage et par un liant renfermant du carbone qui a été réalisé tout d'abord sous la forme d'un corps mince ayant une forme de plaque à partir d'une masse de carbone plastique sous l'action de forces de cisaillement et qui affecte ensuite une forme rigide, stable et comparable à une tôle ayant une configuration déterminée sous l'action d'un traitement thermique subséquent, caractérisé en ce que du coke, du noir de fumée ou des fibres de carbone, ou des mélanges de ces produits, sont incorporés comme matière de remplissage et mélangés avec un liant choisi dans le groupe constitué par les résines de phénolformaldéhyde, les goudrons, les poix ou des mélanges de ces produits, pour former une suspension qui a été travaillée à la température ambiante d'environ 20°C dans le laminoir, le rapport de la quantité de liant à celle de la matière de remplissage dans la masse de carbone étant comprise entre 0,5 et 1,5.

2. Corps en carbone selon la revendication 1, caractérisé en ce que plusieurs de ces corps minces en forme de plaques ont été collés entre eux au moyen d'un liant contenant du carbone et ont été soumis à un traitement thermique pour devenir un corps multi-couches.

3. Corps en carbone selon la revendication 2, caractérisé en ce que la direction de l'orientation structurelle des couches successives dans un corps multi-couches varie d'une couche à la suivante d'un angle compris entre 0 et 180°.

4. Corps en carbone selon l'une quelconque des revendications 1 à 3, caractérisé en ce que le liant présente une proportion résiduelle de carbone de 35 à 70% en poids après la carbonisation.

5. Corps en carbone selon l'une quelconque des revendications 1 à 4, caractérisé en ce que les fibres de carbone ont une longueur sensiblement comprise entre 1 et 10 mm.

6. Corps en carbone selon l'une quelconque des revendications 1 à 5, caractérisé en ce que l'épaisseur du matériau à une seule couche en forme de tôle est comprise entre 0,1 et 5,0 mm.

7. Procédé pour la fabrication d'un corps en carbone suivant l'une quelconque des revendications qui précèdent, selon lequel on fabrique une masse plastique déformable en carbone à partir de particules de carbone comme matière de remplissage et d'un liant contenant du carbone, masse qu'on fait passer ensuite entre les cylindres d'un laminoir pour la soumettre à des forces de cisaillement et la déformer jusqu'à devenir un corps en forme de plaque qui sera soumis à un traitement thermique, soit tel que pour produire un produit en forme de tôle, soit après une mise en forme complémentaire, caractérisé en ce que la mise en forme dans le laminoir se fait entre des cylindres non chauffés à une températures d'environ 20°C.

8. Procédé selon la revendication 7, caractérisé en ce que le traitement thermique est un procédé de condensation pour le liant condensable.

9. Procédé selon la revendication 7, caractérisé en ce que le traitement thermique conduit jusqu'à la cokéfaction du liant.

10. Procédé selon la revendication 7, caractérisé en ce que le traitement thermique du liant et de la matière de remplissage est effectué à une température atteignant la température de graphitisation.

11. Procédé selon l'une quelconque des revendications 7 à 10, caractérisé en ce que la masse plastique de carbone est passée d'abord une première fois entre les cylindres de laminage pour être ensuite pliée une ou plusieurs fois sur elle-même et repoussée au moins une nouvelle fois entre les cylindres de laminage.

12. Procédé selon la revendication 11, caractérisé en ce que la direction de laminage est modifiée à chaque passage dans le cas de passages répétés de la masse de carbone à travers les cylindres de laminage.